# EUROPEAN PATENT SPECIFICATION

(11) **EP 2 836 075 B1**
(45) Date of publication and mention of the grant of the patent: **29.11.2017**
(21) Application number: 13715212.0
(22) Date of filing: 09.04.2013
(51) Int. Cl.: A21B 3/04, F24C 15/00, F24C 15/32, F24C 14/00

(54) **OVEN FOR BAKING FOOD PRODUCTS**
OFEN ZUM BACKEN VON LEBENSMITTELPRODUKTEN
FOUR POUR CUIRE DES PRODUITS ALIMENTAIRES

(30) Priority: 11.04.2012 EP 12163669
(43) Date of publication of application: 18.02.2015
(73) Proprietor: Electrolux Home Products Corporation N.V., 1130 Brussels (BE)
(72) Inventor: CORAI, Loris, I-33170 Pordenone (IT); CESCOT, Paolo, I-33170 Pordenone (IT); FURLANETTO, Riccardo, I-33170 Pordenone (IT); GATTEI, Lorenzo, I-47122 Forli (IT); SIMONATO, Michele, I-33170 Pordenone (IT); VERRONE, Andrea, I-33080 Porcia (IT)
(74) Representative: Electrolux Group Patents
(86) International application number: PCT/EP2013/057379
(87) International publication number: WO 2013/153058

(56) References cited:
- EP-A1- 1 702 542
- EP-A1- 1 914 479
- DE-A1-102008 063 100
- DE-B3-102004 001 220

## Description

The present invention refers to an oven for baking food products.

In particular, the present invention is relative to an oven of the type comprising a baking chamber provided with a door for the introduction of the food products to be baked; a support frame, which extends around the baking chamber, and is thermally insulated from the baking chamber itself; a heating device, which is arranged inside the baking chamber, so as to provide the heat needed to bake the food products; and a feeding device for feeding steam into the baking chamber itself.

Generally, a feeding device of known type comprises a water tank, which is fitted to the support frame, a tank filling duct, to which the user has access from a front wall of the oven, a discharge duct for discharging the water contained in the tank outside of the oven, a steam generator, which communicates with the tank, and a feeding circuit for feeding the steam produced by the steam generator into the baking chamber. Such known ovens are disclosed in EP 1 914 4779 A1 (the closest prior art), EP 1 702 542 A1, DE 10 2008 063 100 A1 and DE10 2004 001 220 B3. In order to prevent water from being fed into the feeding circuit and, thus, into the baking chamber, the feeding device comprises, furthermore, a separation chamber, which is separate from the tank, is arranged between the steam generator and the feeding circuit, and is suitable to separate the water from the steam and to re-circulate the water again to the inlet of the steam generator.

The tank normally comprises a cup-shaped container, and a closing lid, which is mounted on the cup-shaped container in a removable manner and is coupled in a fluid-tight manner to the cup-shaped container itself by means of the interposition of a plurality of gaskets.

The device presents, furthermore, a filter, which is mounted inside the tank, so as to filter the water fed to the aforementioned discharge duct, and a level sensor for controlling the water level inside the tank itself.

Since the filter is mounted inside the tank, the known ovens for baking food products of the type described above present some drawbacks, which are mainly caused by the fact that the clogging of the filter necessarily requires the intervention of a maintenance operator and the replacement of the whole tank.

It is an object of the present invention to provide an oven for baking food products designed to eliminate the aforementioned drawbacks in a straightforward, relatively low-cost manner.

According to the present invention, there is provided an oven for baking food products as claimed in any of the following claims.

The present invention will now be described with reference to the accompanying drawings, which show a non-limiting embodiment, wherein:
figure 1 shows a first schematic rear view in perspective of a preferred embodiment of the oven according to the present invention;
figure 2 shows a second schematic rear view in perspective, with parts removed for clarity, of the oven of figure 1;
figure 3 shows a schematic view in perspective, with sectioned parts and parts removed for clarity, of a first detail of the oven of figures 1 and 2; and
figure 4 shows an exploded view in perspective of a second detail of the oven of figures 1 and 2.

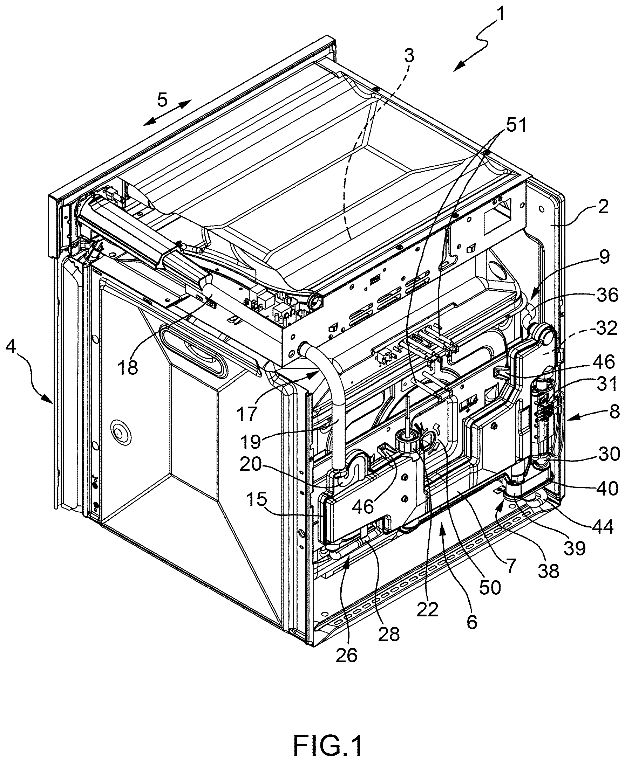

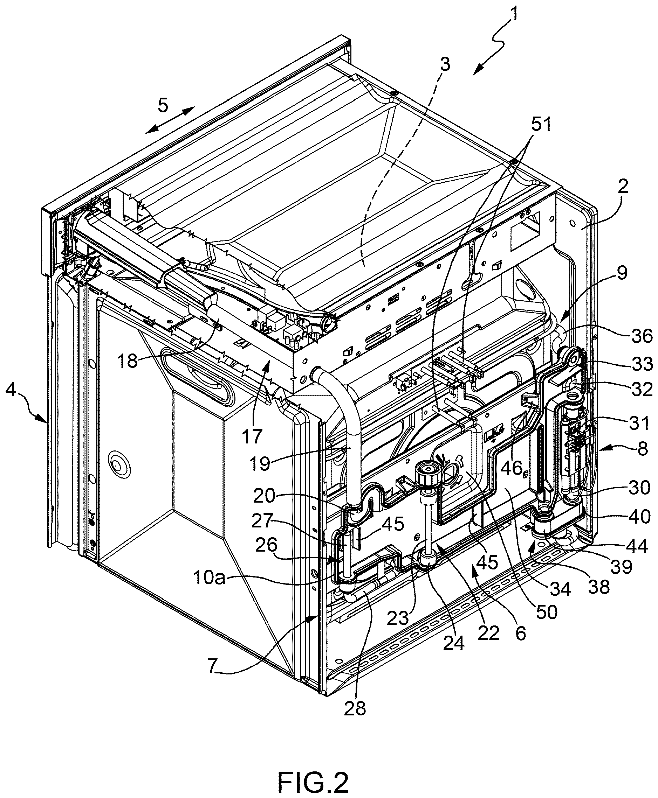

Number 1 in figures 1 and 2 indicates as a whole an oven for baking food products comprising a support frame 2 and a baking chamber 3, which is housed inside the frame 2 and is thermally insulated from the frame 2 itself by means of the interposition of a known insulating material, which is not shown.

The chamber 3 presents an opening (not shown), which allows the food products to be introduced inside the chamber 3, it is formed in correspondence to a front wall 4 of the oven 1, it extends in a substantially vertical containing plane, and is closed by a door (not shown), which is hinged to the frame 2, so as to rotate, with respect to the frame 2 itself, around a fulcrum axis (not shown), which may be parallel or perpendicular to a substantially horizontal direction 5.

The oven 1 is provided, furthermore, with a heating device 51, which is arranged inside the chamber 3, so as to provide the heat needed to bake the food products present inside the chamber 3 itself.

The oven 1 comprises, furthermore, a feeding unit 6, which is suited to feed steam into the chamber 3, and comprises, in turn, a tank 7 for containing water, a steam generator 8 communicating with the tank 7, and a feeding circuit 9 for feeding the steam produced by the generator 8 itself into the chamber 3.

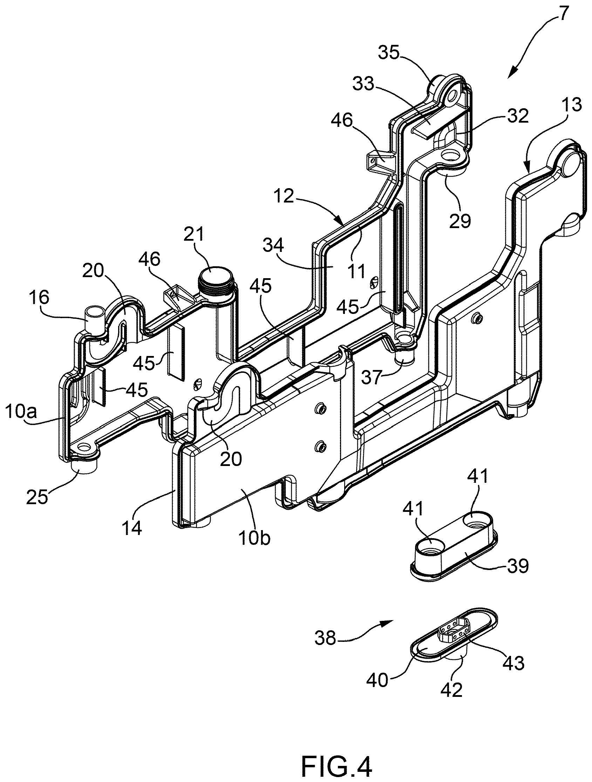

As shown in figure 4, the tank 7 comprises two shells 10, each of which preferably presents a substantially U-shaped form, is cup-shaped, presents a concavity facing the other shell 10, and is made of a polymeric material, in particular an injection-moulded polymeric material. The U-shaped form of each shells 10 allows the tank 7 to be mounted on a back wall of an oven surrounding a motor device (not shown in the figures) arranged on a seat 50 formed on said back wall.

One of the shells 10 (hereinafter referred to as 10a) preferably presents a coupling rib 11, which extends along a peripheral edge 12 of the shell 10a, presents an annular shape, and, when the shells are coupled, it is housed inside an annular coupling seat 13, which is obtained along a peripheral edge 14 of the other shell (hereinafter referred to as 10b).

After the rib 11 has been inserted into the seat 13, the two shells 10a, 10b are coupled to each other along a junction line 15 (figure 1), which extends in a containing plane that is substantially parallel to the opening (not shown) of the chamber 3. The shells 10a, 10b are permanently connected to each other along the line 15 without the interposition of gaskets, in particular by means of welding, preferably but not necessarily by means of vibration welding.

With reference to figures 1, 2, and 4, the tank 7 presents a first sleeve 16, which is manufactured as one single piece together with the shell 10a, is preferably obtained substantially in correspondence to one lateral end of an upper section of the edge 12, projects upwards from the shell 10a, and is connected to a filling duct 17 for filling the tank 7 itself.

The duct 17 extends between the wall 4 and the sleeve 16, and comprises an inlet section 18 inclined downwards and a substantially vertical outlet section 19, which are suited to allow the tank 7 to be filled with water by gravity.

The tank 7 is provided, furthermore, with an air trap 20, which is manufactured partly on the shell 10a and partly on the shell 10b, and is obtained at the inlet of the sleeve 16, so as to prevent the steam from flowing along the duct 17 and from leaving the oven 1 through the wall 4.

The tank 7 presents, furthermore, a second sleeve 21, which is manufactured as one single piece together with the shell 10a, is preferably obtained in correspondence to an intermediate point of the upper section of the edge 12, projects upwards from the shell 10a, and is threaded on the outside, so as to allow the screwing of a level sensor 22.

The sensor 22 comprises a support rod 23 projecting inside the tank 7, and a float 24, which is coupled to the rod 23 in a sliding manner, so as to move between a lowered position corresponding to the minimum water level in the tank 7 and a raised position corresponding to the maximum water level in the tank 7 itself. The position of the float 23 along the rod 23 can be sensed by a sensing device, known per se, that outputs a signal to a display device indicating intelligibly to a user, in one case, the emptying of the tank 7 and, in the other case, the complete filling of the tank 7 itself.

The tank 7 is provided, furthermore, with a third sleeve 25, which is manufactured as one single piece together with the shell 10a, is preferably obtained in correspondence to a lateral end of a lower section of the edge 12, projects downwards from the shell 10a, and allows an overflow duct 26 to be connected to the tank 7.

The duct 26 comprises an inlet section 27, which is substantially vertical and projects inside the tank 7, and an outlet section 28, which communicates with the chamber 3, and is inclined downwards, so as to discharge into the chamber 3, by gravity, the excess water introduced by a user into the tank 7.

The tank 7 presents, furthermore, a fourth sleeve 29, which is manufactured as one single piece together with the shell 10a, is preferably obtained in correspondence to a lateral end of the lower section of the edge 12 opposite to the sleeve 25, projects downwards from the shell 10a, and allows the tank 7 to be connected to the upper end of a substantially vertical duct 30, which defines part of the steam generator 8, and is associated to a heating device 31, which is mounted on the duct 30 itself.

Due to the water evaporation in the duct 30, the generator 8 feeds through the sleeve 29 a mixture, which consists partly of steam and partly of water, and is caused to move forward into a separation chamber 32, which is shaped so as to allow the separation of water from the steam.

The chamber 32 is preferably obtained in correspondence to an upper lateral portion of the tank 7, extends both above the level defined by the inlet of the overflow duct 26 and above the level defined by the raised position of the float 24, and is limited on the upper side by a substantially horizontal inner deflector 33, which is manufactured as one single piece together with the shell 10a, and projects inside the tank 7 perpendicular to a bottom wall 34 of the shell 10a, so as to deviate downwards and into the tank 7 the water fed through the sleeve 29.

The chamber 32 communicates with the feeding circuit 9 by means of a fifth sleeve 35, which is manufactured as one single piece together with the shell 10a, is preferably obtained in correspondence to a lateral end of the upper section of the edge 12 opposite to the sleeve 16, projects horizontally from the wall 34 along a direction which is perpendicular to the horizontal direction 5 and to the opening provided for introducing food products inside the chamber 3. Said fifth sleeve 35 allows the tank 7 to be connected to a feeding duct 36, which defines part of the feeding circuit 9, and feeds the steam to at least one delivery nozzle (not shown), which is mounted inside the chamber 3.

The tank 7 presents, furthermore, a sixth sleeve 37, which is manufactured as one single piece together with the shell 10a, is preferably obtained in correspondence to an intermediate point of the lower section of the edge 12, and projects downwards from the shell 10a itself.

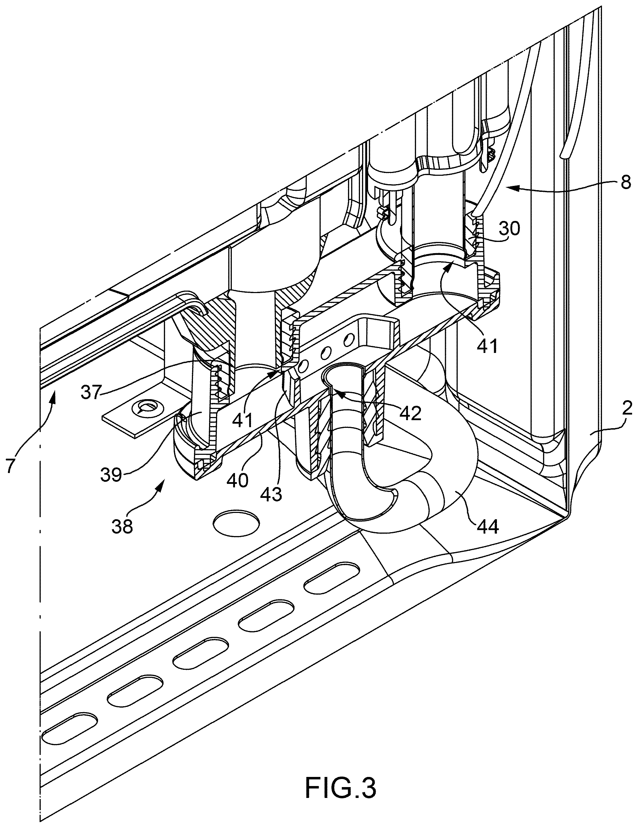

With reference to figures 3 and 4, the tank 7 is associated, furthermore, to a filtering device 38, which is mounted outside and beneath the shells 10a, 10b, and comprises an upper cup-shaped body 39, which is arranged with its concavity facing downwards, is hooked in a removable manner to the sixth sleeve 37 and to the lower end of the steam generator duct 30, and is closed by a lower lid 40, which is mounted in a removable manner on the body 39 itself.

The device 38 presents two ports 41, which are obtained through a bottom wall of the body 39 and are respectively coupled to the sixth sleeve 37, so as to admit water inside body 39, and to the steam generator duct 30 to supply the latter with water and is provided with an outlet 42, which is obtained through the lid 40. The outlet 42 is preferably interposed between the two ports 41 such that water passing from a port 41 to the other port 41 passes also over outlet 42.

The outlet 42 communicates with ports 41 through a perforated annular collar 43, which projects from the lid 40 into the body 39, and extends around the outlet 42, so as to prevent the lime scale present in the water to reach the outlet 42 itself. The outlet 42, furthermore, is connected to a discharge duct 44, which extends between the device 38 and the wall 4, and allows the user to empty the tank 7 and the steam generator duct 30.

The outlet end of the discharge duct 44 is provided with an outlet valve (not shown) configured to be operated between an open position of the discharge duct 44 and a closed position of the discharge duct 44. When the outlet valve (not shown) is closed, the water flows from the outlet port 41 of the tank 7 to the inlet port 41 of the steam generator duct 30 and to the outlet 42 and fills the steam generator duct 30 and the discharge duct 44, while when the outlet valve (not shown) is open, the water contained in the tank 7 and in the steam generator 8 flows out of the discharge duct 44.

In order to limit the heat exchange between the part of the tank 7 corresponding to the sleeve 16 and to the air trap 20 and the part of the tank 7 corresponding to the separation chamber 32 and in order to guarantee a correct operation of the sensor 22, the tank 7 is provided with a plurality of substantially vertical dividing baffles 45 (in particular four baffles 45), which are manufactured as one single piece together with the shell 10a, project inside the tank 7 perpendicular to the wall 34, and are arranged at a given distance from the edge 12.

The tank 7 is provided, furthermore, with a plurality of fixing brackets 46, which are manufactured as one single piece together with the shell 10a, so as to allow the tank 7 to be fitted to the frame 2. If preferred, said plurality of fixing brackets 46 may be formed as a single piece part on one of the two shells 10a, 10b and part on the other shell.

According to some variants that are not shown:
each sleeve 16 and/or 21 and/or 25 and/or 29 and/or 35 and/or 37 is manufactured as one single piece together with the shell 10b;
each sleeve 16 and/or 21 and/or 25 and/or 29 and/or 35 and/or 37 is obtained partly on the shell 10a and partly on the shell 10b; in this way an inlet/outlet opening formed by each of said sleeve is divided by the tank shell junction line 15.
each dividing baffle 45 is manufactured as one single piece together with the shell 10b; and
each dividing baffle 45 is obtained partly on the shell 10a and partly on the shell 10b.

In use, the tank 7 and the duct 30 of the steam generator 8 are filled with water by the user through the filling duct 17. During filling of the tank 7 and of the duct 30, the outlet valve (not shown) of the discharge duct 44 is in its closed position.

Once the float 24 of the level sensor 22 has reached a position comprised between its lowered position and its raised position, or a position equal the latter, the food products to be baked have been inserted into the baking chamber 3, and a steam cooking mode of operation has been selected, the heating device 31 is activated, so as to cause the evaporation of a water amount present in the duct 30.

The mixture of water and steam generated by the heating of the water present in the duct 30 is fed through the sleeve 29 into the separation chamber 32, where the water bounces against the deflector 33, so as to be re-circulated again in the tank 7, while the steam is fed, first of all, through the sleeve 35, then along the duct 36 of the feeding circuit 9, and, finally, into the baking chamber 3.

With reference to what has been described above, it should be pointed out that:
the excess water introduced by the user into the tank 7 through the duct 17 is discharged into the baking chamber 3 through the overflow duct 26;
at the end of one or more baking cycles, the tank 7 and the steam generator 8 may be emptied by the user through the discharge duct 44 by opening the outlet valve (not shown) of the discharge duct 44;
the position and the shape of the filtering device 38 allow an easy maintenance and cleaning of the filtering device 38 itself by simply removing the lid 40 from the body 39;
the permanent connection of the shells 10a, 10b does not require the use of gaskets and allows the whole tank 7 to be inserted in the assembly line of the oven 1; and
the fact that the separation chamber 32 is built-in in the tank 7 allows a reduction of the number of components used while assembling the oven 1 itself.

In addition, a tank 7 made according to the invention allows an easy installation of a water level sensor device 22 that may be inspected/removed by the tank 7 at any time. Furthermore, the provision of one or more sleeve 16, 21, 25, 29, 35, 37 formed partly on the shell 10a and partly on the shell 10b simplify the manufacture process of the tank 7 because reduces the number of runners to be installed in a mould when forming each of the two shells 10a, 10b. In fact, by forming one or more sleeve 16, 21, 25, 29, 35, 37 as disclosed above, the joining direction of the shells 10a, 10b of the tank 7 is the same as the de-moulding direction of each of the shells in the injection-moulding machine, and it is perpendicular to the tank shells assembly plane.

Since the filtering device 38 is located at the inlet of the discharge duct 44, the biggest residuals are blocked by the filtering device 38 and prevented from flowing down into the discharge duct 44 till the outlet valve (not shown). In this way, only the small residuals will arrive at the outlet valve (not shown), preventing the bigger residuals from blocking the outlet valve (not shown) itself. The bigger residuals are collected by the filtering device 38 and are then transformed into small residuals by performing the cleaning operation suggested on the user manual.

## Claims

1. An oven for baking food products comprising a baking chamber (3), and a feeding unit (6) for feeding steam into the baking chamber (3), the feeding unit (6) comprising a tank (7) for containing water, a steam generator (8) in fluid communication with the tank (7), a feeding circuit (9) for feeding steam produced by the steam generator (8) into the baking chamber (3), a discharge duct (44) for discharging the water contained in the tank (7) and in the steam generator (8) outside of the oven, and a filtering device (38) mounted outside of the tank (7) for filtering the water fed to the discharge duct (44) itself, the discharge duct (44) being provided with an outlet valve; and **characterized in that** the filtering device (38) is located at the inlet of the discharge duct (44) and comprises a first port (41) in fluid communication with the tank (7), a second port (41) in fluid communication with the steam generator (8), and an outlet (42) in fluid communication with the discharge duct (44); the outlet valve being configured to be operated between an open position of the discharge duct (44), in which the water contained in the tank (7) and in the steam generator (8) flows out of the discharge duct (44), and a closed position of the discharge duct (44), in which the water flows from an outlet port (41) of the tank (7) to an inlet port (41) of a steam generator duct (30) and to the outlet (42) and fills the steam generator duct (30) and the discharge duct (44).

2. An oven according to claim 1, wherein the filtering device (38) is connected to the tank (7) and to the steam generator (8) in a removable manner.

3. An oven according to claim 1 or 2, wherein the filtering device (38) is mounted beneath the tank (7).

4. An oven according to any of the previous claims, wherein the filtering device (38) comprises an upper cup-shaped body (39), which is connected to the tank (7) and to the steam generator (8) in a releasable manner, and a lower lid (40), which is mounted on the cup-shaped body (39) in a releasable manner.

5. An oven according to claim 4, wherein the filtering device (38) comprises two ports (41), which respectively communicate with the tank (7) and the steam generator (8), and are formed through a bottom wall of the cup-shaped body (39), and an outlet (42), which is obtained through the lid (40).

6. An oven according to claim 5 wherein the outlet (42) is interposed between the first and the second port (41).

7. An oven according to claim 5 or 6, wherein a perforated annular collar (43) extends around the outlet (42).

8. An oven according to claim 7 wherein the perforated annular collar (43) projects from the lid (40) into the body (39).

## Patentansprüche

1. Ofen zum Backen von Lebensmittelprodukten, der eine Backkammer (3) und eine Zufuhreinheit (6) zum Zuführen von Dampf in die Backkammer (3) umfasst, wobei die Zufuhreinheit (6) einen Tank (7) zum Fassen von Wasser, einen Dampferzeuger (8) in Strömungsverbindung mit dem Tank (7), einen Zufuhrkreis (9) zum Zuführen von durch den Dampferzeuger (8) erzeugtem Dampf in die Backkammer (3), einen Auslassdurchgang (44) zum Auslassen des in dem Tank (7) und in dem Dampferzeuger (8) enthaltenen Wassers außerhalb des Ofens und eine außerhalb des Tanks (7) befestigte Filtervorrichtung (38) zur Filterung des dem Auslassdurchgang (44) selbst zugeführten Wassers umfasst, wobei der Auslassdurchgang (44) mit einem Auslassventil versehen ist; und **dadurch gekennzeichnet, dass** die Filtervorrichtung (38) an dem Einlass des Auslassdurchgangs (44) positioniert ist und einen ersten Kanal (41) in Strömungsverbindung mit dem Tank (7), einen zweiten Kanal (41) in Strömungsverbindung mit dem Dampferzeuger (8) und einen Auslass (42) in Strömungsverbindung mit dem Auslassdurchgang (44) umfasst; wobei das Auslassventil dazu konfiguriert ist, zwischen einer geöffneten Stellung des Auslassdurchgangs (44), in der das in dem Tank (7) und in dem Dampferzeuger (8) enthaltene Wasser aus dem Auslassdurchgang (44) hinausströmt, und einer geschlossenen Stellung des Auslassdurchgangs (44), in der das Wasser aus einem Auslasskanal (41) des Tanks (7) zu einem Einlasskanal (41) eines Dampferzeugerdurchgangs (30) und zu dem Auslass (42) strömt und den Dampferzeugerdurchgang (30) und den Auslassdurchgang (44) füllt, betrieben zu werden.

2. Ofen nach Anspruch 1, wobei die Filtervorrichtung (38) lösbar mit dem Tank (7) und dem Dampferzeuger (8) verbunden ist.

3. Ofen nach Anspruch 1 oder 2, wobei die Filtervorrichtung (38) unterhalb des Tanks (7) befestigt ist.

4. Ofen nach einem der vorhergehenden Ansprüche, wobei die Filtervorrichtung (38) einen oberen becherförmigen Körper (39), der mit dem Tank (7) und dem Dampferzeuger (8) lösbar verbunden ist, und einen unteren Deckel (40), der lösbar an dem becherförmigen Körper (39) befestigt ist, umfasst.

5. Ofen nach Anspruch 4, wobei die Filtervorrichtung (38) zwei Kanäle (41), die mit dem Tank (7) bzw. dem Dampferzeuger (8) in Verbindung stehen und durch eine untere Wand des becherförmigen Körpers (39) hindurch ausgebildet sind, und einen Auslass (42), der durch den Deckel (40) ausgebildet ist, umfasst.

6. Ofen nach Anspruch 5, wobei der Auslass (42) zwischen dem ersten und dem zweiten Kanal (41) angeordnet ist.

7. Ofen nach Anspruch 5 oder 6, wobei sich ein perforierter ringförmiger Bund (43) um den Auslass (42) herum erstreckt.

8. Ofen nach Anspruch 7, wobei der perforierte ringförmige Bund (43) von dem Deckel (40) in den Körper (39) vorragt.

## Revendications

1. Four pour la cuisson de produits alimentaires comprenant une chambre de cuisson (3) et une unité d'alimentation (6) servant à acheminer de la vapeur à la chambre de cuisson (3), l'unité d'alimentation (6) comprenant un réservoir (7) destiné à contenir de l'eau, un générateur de vapeur (8) en communication fluidique avec le réservoir (7), un circuit d'alimentation (9) servant à acheminer de la vapeur produite par le générateur de vapeur (8) à la chambre de cuisson (3), une conduite d'évacuation (44) servant à évacuer l'eau se trouvant dans le réservoir (7) et dans le générateur de vapeur (8) à l'extérieur du four, et un dispositif de filtration (38) installé à l'extérieur du réservoir (7) et servant à filtrer l'eau acheminée à la conduite d'évacuation (44) elle-même, la conduite d'évacuation (44) étant pourvue d'une valve de sortie ; et **caractérisé en ce que** le dispositif de filtration (38) est situé au niveau de l'entrée de la conduite d'évacuation (44) et comprend un premier orifice (41) en communication fluidique avec le réservoir (7), un second orifice (41) en communication fluidique avec le générateur de vapeur (8) et une sortie (42) en communication fluidique avec la conduite d'évacuation (44) ; la valve de sortie étant configurée pour être actionnée entre une position ouverte de la conduite d'évacuation (44), dans laquelle l'eau se trouvant dans le réservoir (7) et le générateur de vapeur (8) s'écoule hors de la conduite d'évacuation (44), et une position fermée de la conduite d'évacuation (44), dans laquelle l'eau s'écoule d'un orifice de sortie (41) du réservoir (7) à un orifice d'entrée (41) d'une conduite (30) du générateur de vapeur et à la sortie (42) et remplit la conduite (30) du générateur de vapeur et la conduite d'évacuation (44).

2. Four selon la revendication 1, dans lequel le dispositif de filtration (38) est raccordé au réservoir (7) et au générateur de vapeur (8) de manière amovible.

3. Four selon la revendication 1 ou 2, dans lequel le dispositif de filtration (38) est installé sous le réservoir (7).

4. Four selon l'une quelconque des revendications précédentes, dans lequel le dispositif de filtration (38) comprend un corps supérieur en forme de pot (39), qui est raccordé au réservoir (7) et au générateur de vapeur (8) de manière libérable, et un couvercle inférieur (40), qui est installé sur le corps en forme de pot (39) de manière libérable.

5. Four selon la revendication 4, dans lequel le dispositif de filtration (38) comprend deux orifices (41), qui communiquent respectivement avec le réservoir (7) et le générateur de vapeur (8), et sont formés à travers une paroi inférieure du corps en forme de pot (39), et une sortie (42), qui est réalisée à travers le couvercle (40).

6. Four selon la revendication 5, dans lequel la sortie (42) est placée en position intermédiaire entre les premier et second orifices (41).

7. Four selon la revendication 5 ou 6, dans lequel une bague annulaire perforée (43) s'étend autour de la sortie (42).

8. Four selon la revendication 7, dans lequel la bague annulaire perforée (43) fait saillie à partir du couvercle (40) dans le corps (39).
